# EUROPEAN PATENT APPLICATION

(11) **EP 0 854 122 A1**
(43) Date of publication of application: **22.07.1998**
(21) Application number: 96931822.9
(22) Date of filing: 16.09.1996
(51) Int. Cl.: C04B 35/16, C04B 33/13, C04B 33/20

(54) **NEW CERAMIC MATERIAL AND PROCESS FOR ITS FABRICATION, APPLICABLE TO THE PRODUCTION OF TILES AND THE LIKE FROM SLATE AND RESIDUE THEREOF**

(30) Priority: 19.07.1996 ES 9601609
(71) Applicant: Cupire Padesa, S.A., 32330 Sobradelo de Valdeorras (ES)
(72) Inventor: FERNANDEZ BLANCO, Manuel, E-32330 Sobradelo de Valdeorras (ES)
(74) Representative: Lahidalga de Careaga, Jose Luis
(86) International application number: ES9600175
(87) International publication number: WO9803445

(57) **Abstract**

New ceramic material and process for its manufacture, applicable for the obtention of abaculi, tiles and the like from shales and their wastes, which consists in sieving dry shale powder to a size below 100 microns and which have a water content below 5%, subsequently homogenizing and conditioning the same in order to subsequently introduce the sieved powders into an elastic mold, closed under vacuum and sealed, and then becoming said mold with said powders compacted at a pressure close to 170 Mpa, subsequently being said compacted material extracted from the mold and machined into rectangular blocks, rectifying, if necessary, with SiC or abrasive materials of similar hardness, and then passing to the inside of a sintering furnace where it is heated for 30 minutes at a rate of 5° C/ minute, to a temperature of approximately between 1150 °C and 1175 °C to be subsequently cooled at the same rate at which it was heated, but in reverse sense, minus 5° C/min, maintaining at all times an atmosphere of air. The mold can also be a floating matrix lubricated with zinc stearate, the dry powders being subsequently compacted by means of a press to apply a final pressure which ranges from between 100 Mpa and 300 Mpa, subsequently extracting the compacted material from the matrix and introducing it into said sintering oven with identical times and rates of heating and cooling.

## Description

### OBJECT OF THE INVENTION

The present specification refers to the application for a patent of invention relative to a new ceramic material and a process for its manufacture, applicable for the obtention of abaculi, tiles and the like from shales and their wastes, with the object of obtaining from the same, a new construction material which may be used for the manufacture of different pieces or objects, all of them obtained from aluminosilicates originating from the industrial ores known as "shales" and from the remains or wastes obtained after their first recovery (recycling).

### FIELD OF THE INVENTION

This invention finds its application within the industry dedicated to the manufacture of construction materials, and, more specifically, in the technological field of manufacturing processes known as "sintering of ceramic materials".

### BACKGROUND TO THE INVENTION

The applicant is aware of the current existence of several processes for the recovery of materials considered or classified as industrial wastes, used for the manufacturing of bricks.

Although it has been proved that said processes result in the obtention of bricks with suitable characteristics, the applicant has no knowledge of cases in which aluminosilicates from shales are employed for the manufacture of products in the form of tiles, abaculi or the like.

The applicant has also got no knowledge of the use of a process which results in the obtention of products applicable in construction which are constituted by sieved dry powders.

### DESCRIPTION OF THE INVENTION

The new ceramic material and process for its manufacture, applicable for the obtention of abaculi, tiles and the like from shales and their wastes, which the invention proposes, constitutes by itself an obvious novelty within its field of application, as by the use of the process in question, a new ceramic material is obtained which is composed by a suitable mixture of silica and aluminosilicates.

The product obtained presents an optimum mechanical strength, high hardness, and superior reliability values, using the pressure compacting method, cold isostatic or unidirectional pressure in a floating matrix, followed by machining and sintering in a furnace with an atmosphere of air.

More specifically, the new ceramic material and process for its manufacture, applicable for the obtention of abaculi, tiles and the like from shales and their wastes, object of the invention, starts from dry shale powder, sieved to a size below 100 microns, and with a water content below 5%, followed by its subsequent homogenization and conditioning.

The shale powders so obtained and prepared are introduced into a flexible mold, which is subsequently sealed after having made the corresponding vacuum, or, instead, it is introduced in a floating matrix, previously lubricated with zinc stearate and in the form which one wishes to obtain.

The set comprised by the mold and the dry shale powder is subjected to high pressures, either isostatically in the cold at pressures close to 200 MPa, or rather, uniaxially, in the case of employing matrices with a hydraulic press a similar pressure of 200 MPa or above is used. Subsequently, the compacted material obtained must be extracted from the mold or form, machined into rectangular bricks, if necessary, by rectification operations with SiC, and subsequent transport to the sintering oven.

The heating of the pieces so obtained, formed by the compacted powders, in the sintering oven, is carried out at a rate close to 5°C/min, until a temperature in the range of between 1150 °C and 1175 °C is achieved, at which they will remain for at least 30 minutes.

Cooling is carried out at the same rate at which the heating was performed, but in the opposite sense, keeping an atmosphere of air throughout the whole process, as it is not necessary to have inertisation.

As can be seen from the description of the process which has been performed above, the present invention provides new sintered ceramic materials which posses some very specific characteristics, due to the fact that the material from which the products obtained are made, are silica and aluminosilicate, all of them obtained from dry shale powders, as described previously, sieved to a size below 100 microns, obtaining a density which ranges from between 2.2 g/cm³ and 2.6 g/cm³.

The new manufactured materials have a hardness which ranges from between 900 and 950 HV 0.1 and a bending strength close to 100 MPa, which is of great importance for their use as construction materials.

Consequently, according to what was previously stated, the new ceramic material so obtained is reliable, having a Weibull modulus of 8-10.

### PREFERRED EMBODIMENT OF THE INVENTION

The new ceramic material and process for its manufacture, applicable for the obtention of abaculi, tiles and the like from shales and their wastes, which are here extolled, are manufactured starting from shales and their crops or from industrial wastes and remains from silicas originating from industrial ores known as shales, formed by a dry powdery material, said powders being sieved to a size below 100 microns and having a water content below 5%, and also being subjected to a homogenization and subsequent conditioning stage, to be subsequently introduced, after concluding the homogenization and subsequent conditioning stage, within a floating matrix or a mold, which is sealed under vacuum and subsequently closed. The matrix or mold, with its sieved dry powder content, then goes to be compacted by isostatic or uniaxial pressure, both at pressures close to 200 MPa, subsequently being subjected to extraction from the mold or matrix, to be subsequently machined, if necessary, using rectification operations with SiC and then passing to the inside of a sintering furnace where, at a T of 5° C/minute, 1175 °C are achieved, remaining at this temperature for at least 30 minutes.

After completing the predetermined 30 minute heating stage, the compacted powders are cooled at a similar rate to the one used for the heating, but in reverse sense, maintaining throughout the whole process an atmosphere of air.

The materials obtained and manufactured with sintered material have a density which ranges from between 2.2 g/cm³ and 2.6 g/cm³.

Equally, the material obtained has a hardness which ranges from between 900 and 950 HV 0.01 and a bending strength close to 100 MPa.

Finally, it must be pointed out that the material obtained is reliable, having a Weibull modulus of 8-10.

It is not considered necessary to extend any further in the description so as to ensure that any expert in the art will understand the scope of the invention and the advantages derived from the same.

The materials, shape, size and disposition of the elements are susceptible to variation as long as this does not imply an alteration in the essence of the invention.

The terms in which this report has been described should always be taken in the wide sense and not as limiting.

## Claims

1. New ceramic material and process for its manufacture, applicable for the obtention of abaculi, tiles and the like from shales and their wastes, characterized in that they are manufactured starting from shales and their crops or from industrial wastes and remains from silicas originating from industrial ores known as shales, formed by a dry powdery material, which is sieved to a size below 100 microns.

2. New ceramic material and process for its manufacture, applicable for the obtention of abaculi, tiles and the like from shales and their wastes, according to the first claim, characterized in that the water content is below 5%, also being subjected to a homogenization and subsequent conditioning stage, to be subsequently introduced, after concluding the homogenization and subsequent conditioning stage, into a floating matrix or a mold, which is sealed under vacuum and subsequently closed. The matrix or mold, with its sieved dry powder content, then goes to be compacted by isostatic or uniaxial pressure, both at pressures close to 200 MPa, subsequently being subjected to extraction from the mold or matrix, to be subsequently machined, if necessary, using rectification operations with SiC and then passing to the inside of a sintering furnace where, with a thermal gradient of 5° C/minute, 1175 °C are achieved, remaining in these conditions for at least 30 minutes.

3. New ceramic material and process for its manufacture, applicable for the obtention of abaculi, tiles and the like from shales and their wastes, according to the previous claims, characterized in that after completing the predetermined 30 minute heating stage, the compacted powders are cooled at a similar rate to the one used for heating, but in reverse sense, maintaining throughout the whole process an atmosphere of air.

4. New ceramic material and process for its manufacture, applicable for the obtention of abaculi, tiles and the like from shales and their wastes, according to the first, second and third claims, characterized in that the materials obtained and manufactured with the so sintered material have a density which ranges from between 2.2 g/cm³ and 2.6 g/cm³.

5. New ceramic material and process for its manufacture, applicable for the obtention of abaculi, tiles and the like from shales and their wastes, according to the first, second and third claims, characterized in that the material so obtained has a hardness which ranges from between 900 and 950 HV 0.1 and a bending strength close to 100 MPa.

6. New ceramic material and process for its manufacture, applicable for the obtention of abaculi, tiles and the like from shales and their wastes, according to the precedent claims, characterized in that the material so obtained is reliable, having a Weibull modulus of 8-10.
